# EUROPEAN PATENT APPLICATION

(11) **EP 3 950 812 A1**
(43) Date of publication of application: **09.02.2022**
(21) Application number: 20777861.4
(22) Date of filing: 25.03.2020
(51) Int. Cl.: C08K 7/02, C08L 67/02, C08L 69/00, C08J 5/04

(54) **REINFORCED THERMOPLASTIC POLYESTER RESIN COMPOSITION**

(30) Priority: 28.03.2019 JP 2019063699
(71) Applicant: TOYOBO CO., LTD., Osaka-shi Osaka 530-8230 (JP)
(72) Inventor: SHIMIZU, Takahiro, Otsu-shi, Shiga 520-0292 (JP); SHIMOHARAI, Takuya, Otsu-shi, Shiga 520-0292 (JP)
(74) Representative: Müller-Boré & Partner Patentanwälte PartG mbB
(86) International application number: PCT/JP2020/013251
(87) International publication number: WO 2020/196598

(57) **Abstract**

The present invention relates to a reinforced thermoplastic polyester resin composition comprising 20 to 35 parts by mass of a polybutylene terephthalate resin (A), 1 to 10 parts by mass of a polyethylene terephthalate resin (B), and 1 to 10 parts by mass of a copolymerized polybutylene terephthalate resin (C), 5 to 12 parts by mass of a copolymerized polyethylene terephthalate resin (D), 1 to 6 parts by mass of a polycarbonate resin (E), 45 to 60 parts by mass of a fiber reinforcing material (F), and 0.05 to 2 parts by mass of a transesterification inhibitor (G), based on 100 parts by mass in total of components (A), (B), (C), (D), (E) and (F), which can stably form a molding having high rigidity (with a bending modulus of more than 30 GPa) and high strength, and having few appearance defects such as floating of the fiber reinforcing material, and a regular uniform textured appearance, under a wide range of molding conditions.

## Description

### TECHNICAL FIELD

The present invention relates to a reinforced polyester resin composition containing a thermoplastic polyester resin and a fiber reinforcing material. Specifically, the present invention relates to a reinforced polyester resin composition which can form a molding having high rigidity and high strength, and yet having few appearance defects due to floating of a fiber reinforcing material, and a regular uniform textured appearance or a mirror surface appearance.

### BACKGROUND ART

Generally due to excellence in mechanical properties, heat resistance, chemical resistance, etc., polyester resins have been widely used for automobile parts, electric and electronic parts, household utensils, etc. In particular, it is known that polyester resin compositions reinforced with an inorganic reinforcing material such as glass fiber are greatly improved in rigidity, strength and heat resistance, and particularly the rigidity is improved in proportion to the amount of the inorganic reinforcing material added.

However, with an increase in addition of an inorganic reinforcing material such as glass fiber, the inorganic reinforcing material tends to float on the surface of a molding, possibly resulting in the problem of a decrease in surface gloss in case of a molding requiring a desired surface gloss, and the problem of poor textured appearance in case of a molding with a matte surface.

In particular, it is very difficult to obtain a satisfactory appearance of a polyester resin having a high crystallization rate such as polybutylene terephthalate, due to poor transferability to a mold caused by crystallization during molding.

On the other hand, as a method for obtaining a good textured appearance, a method of blending a polyester resin with a copolymer obtained by grafting a vinyl polymer containing a hydroxy group on an acrylic ester rubber-like polymer has been proposed (e.g., Patent Literatures 1 and 2). Since the graft polymer containing rubber and the polyester resin are not dispersed well by simple blending, there is a problem of texture irregularity with uniformly deteriorated texture transferability. Although the methods in Patent Literatures 1 and 2 are effective in suppressing the texture irregularity, there is a problem that a molding formed by the method has poor mechanical properties and low fluidity. Further, a method using isophthalic acid-modified polybutylene terephthalate and a polycarbonate resin (e.g., Patent Literatures 3 and 4) has been proposed. However, in Patent Literature 3, there is a problem that the appearance is impaired with an increase in the filling amount to provide high mechanical strength and high rigidity. In Patent Literature 4, molding stability and molding cycle are not satisfactory, probably due to a large amount of isophthalic acid-modified polybutylene terephthalate and the polycarbonate resin required.

Although Patent Literature 5 has been proposed to remedy these shortcomings, there are problems such as insufficient rigidity for use requiring high rigidity, deteriorated appearance with an increased amount of reinforcing material for rigidity enhancement, and very narrow molding conditions resulting in difficulty in obtaining good products in a stable manner. Further improvement has been therefore required.

In recent years, a molding has been made thinner and longer, so that higher rigidity is required. In addition, the appearance is required to have the same or higher quality than before. It is, therefore, very important to achieve a balance between the qualities. As in Patent Literature 6, there is also a proposal for a material having a bending modulus of more than 20 GPa, but no polyester material having an ultra-high rigidity of more than 30 GPa and a good appearance has been proposed so far.

### CITATION LIST

### PATENT LITERATURE

PTL 1: Japanese Patent Laying-Open No. 2003-55414
PTL 2: Japanese Patent Laying-Open No. 2002-194034
PTL 3: Japanese Patent Laying-Open No. 2007-92005
PTL 4: Japanese Patent Laying-Open No. 2008-120925
PTL 5: WO 2015/008831
PTL 6: Japanese Patent Laying-Open No. 2017-39878

### SUMMARY OF INVENTION

### TECHNICAL PROBLEM

An object of the present invention is to provide a reinforced polyester resin composition which can form a molding having high rigidity (bending modulus of more than 30 GPa) and high strength, and yet having few appearance defects due to floating of a fiber reinforcing material and little warpage deformation, and a regular uniform textured appearance, and also secure a good molding cycle.

### SOLUTION TO PROBLEM

The present inventors have completed the present invention based on founding that the problem can be solved by containing proper amounts of specific resins and properly adjusting the ratio of each component as a result of extensive studies on the constitution and properties of a polyester resin composition in order to solve the problem described above.

In other words, the present invention has the following constitution.
[1] A reinforced thermoplastic polyester resin composition, comprising 20 to 35 parts by mass of a polybutylene terephthalate resin (A), 1 to 10 parts by mass of a polyethylene terephthalate resin (B), 1 to 10 parts by mass of a copolymerized polybutylene terephthalate resin (C), 5 to 12 parts by mass of a copolymerized polyethylene terephthalate resin (D), 1 to 6 parts by mass of a polycarbonate resin (E), 45 to 60 parts by mass of a fiber reinforcing material (F), and 0.05 to 2 parts by mass of a transesterification inhibitor (G), based on 100 parts by mass in total of components (A), (B), (C), (D), (E) and (F), and satisfying the following requirements (1) and (2):
   (1) a molding obtained by injection molding of the reinforced thermoplastic polyester resin composition has a bending modulus of more than 30 GPa; and
   (2) the reinforced thermoplastic polyester resin composition has a crystallization temperature during cooling TC2 (°C) of 165°C or more and less than 190°C as measured by differential scanning calorimetry (DSC).
[2] The reinforced thermoplastic polyester resin composition described in [1], wherein the fiber reinforcing material (F) contains a glass fiber with a flat cross section (F-1) having a ratio between major diameter and minor diameter of a fiber cross section (major diameter/minor diameter) of 1.3 to 8, and a carbon fiber (F-2).
[3] The reinforced thermoplastic polyester resin composition described in [1] or [2], wherein the copolymerized polybutylene terephthalate resin (C) contains at least one selected from the group consisting of isophthalic acid, sebacic acid, adipic acid, trimellitic acid, 2,6-naphthalenedicarboxylic acid, ethylene glycol, diethylene glycol, neopentyl glycol, 1,4-cyclohexanedimethanol, 1,2-propanediol, 1,3-propanediol, and 2-methyl-1,3-propanediol, as a copolymerization component.
[4] The reinforced thermoplastic polyester resin composition described in any of [1] to [3], wherein the copolymerized polybutylene terephthalate resin (C) contains 10 to 40 mol% of isophthalic acid as copolymerization component, based on 100 mol% in total of all the acid components constituting (C).
[5] The reinforced thermoplastic polyester resin composition described in any of [1] to [4], wherein the copolymerized polyethylene terephthalate resin (D) contains at least one selected from the group consisting of isophthalic acid, sebacic acid, adipic acid, trimellitic acid, 2,6-naphthalenedicarboxylic acid, diethylene glycol, neopentyl glycol, 1,4-cyclohexanedimethanol, 1,4-butanediol, 1,2-propanediol, 1,3-propanediol, and 2-methyl-1,3-propanediol, as a copolymerization component.
[6] The reinforced thermoplastic polyester resin composition described in any of [1] to [5], wherein the copolymerized polyethylene terephthalate resin (D) contains 20 to 60 mol% of neopentyl glycol as a copolymerization component, based on 100 mol% in total of all the glycol components constituting (D).
[7] A molding formed of the reinforced thermoplastic polyester resin composition described in any of [1] to [6], having a textured surface appearance.

### ADVANTAGEOUS EFFECTS OF INVENTION

According to the present invention, even in the case of a resin composition with a large amount of fiber reinforcing material blended, by setting the solidification (crystallization) rate (TC2 as an alternative measure) of the resin composition in a mold within a specified range, floating of the fiber reinforcing material on the surface of a molding can be suppressed, so that the appearance of the molding can be greatly improved. Further, by including a specified reinforcing material within a specified range, a molding having high strength, high rigidity, and good appearance of mirror surface can be obtained without a significant increase in molding cycle, and further, regarding a textured molding, a jet-black molding excellent in design having a low gloss level without texture irregularity can be produced.

### DESCRIPTION OF EMBODIMENTS

The present invention is specifically described as follows. The content of each component constituting a reinforced thermoplastic polyester resin composition is expressed in parts by mass, based on 100 parts by mass in total of components (A), (B), (C), (D), (E) and (F).

Polybutylene terephthalate resin (A) in the present invention is a main component resin among all the polyester resins in the resin composition of the present invention. It is preferable that polybutylene terephthalate resin (A) have a highest content among all the polyester resins. The polybutylene terephthalate resin (A) is not particularly limited, and a homopolymer formed of terephthalic acid and 1,4-butanediol is preferably used. Further, based on 100 mol% in total of all the acid components constituting polybutylene terephthalate resin (A) and 100 mol% in total of all the glycol components, about up to 5% of other components may be copolymerized within a range where moldability, crystallinity, surface gloss, etc., are not impaired. Examples of the other components include components for use in copolymerized polybutylene terephthalate resin (C) described below.

As a measure of the molecular weight of polybutylene terephthalate resin (A), the reduced viscosity (0.1 g of a sample is dissolved in 25 ml of a mixed solvent of phenol/tetrachloroethane (mass ratio: 6/4) for measurement at 30°C with use of an Ubbelohde viscosity tube) is preferably within the range of 0.5 to 0.8 dl/g, more preferably 0.55 to 0.7 dl/g, and still more preferably within the range of 0.6 to 0.7 dl/g. At a reduced viscosity of less than 0.5 dl/g, the toughness of the resin decreases, and burrs tend to occur easily due to the too high fluidity. On the other hand, at a reduced viscosity of more than 0.8 dl/g, due to the effect of decreased fluidity of the composition of the present invention, it becomes difficult to apply a uniform pressure to a textured molding, so that a good textured appearance tends to be hardly obtained (the range of molding conditions is narrowed).

The content of polybutylene terephthalate resin (A) is 20 to 35 parts by mass, preferably 20 to 30 parts by mass, and still more preferably 20 to 27 parts by mass. Blending polybutylene terephthalate resin (A) within the range allows various properties to be satisfied.

Polyethylene terephthalate resin (B) in the present invention is basically a homopolymer of ethylene terephthalate units. Further, based on 100 mol% in total of all the acid components constituting polyethylene terephthalate resin (B) and 100 mol% in total of all the glycol components, about up to 5 mol% of other components may be copolymerized. Examples of the other components include components for use in copolymerized polyethylene terephthalate resin (D) described below. As the other components, diethylene glycol produced through condensation of ethylene glycol during polymerization is also included.

As a measure of the molecular weight of polyethylene terephthalate resin (B), the reduced viscosity (0.1 g of a sample is dissolved in 25 ml of a mixed solvent of phenol/tetrachloroethane (mass ratio: 6/4) for measurement at 30°C with use of an Ubbelohde viscosity tube) is preferably 0.4 to 1.0 dl/g, more preferably 0.5 to 0.9 dl/g. At a reduced viscosity of less than 0.4 dl/g, strength of the resin tends to decrease, and at a reduced viscosity of more than 1.0 dl/g, fluidity of the resin tends to decrease.

The content of polyethylene terephthalate resin (B) is 1 to 10 parts by mass, preferably 3 to 8 parts by mass. Blending polyethylene terephthalate resin (B) within the range allows various properties to be satisfied.

Copolymerized polybutylene terephthalate resin (C) in the present invention is a resin that contains 80 mol% or more of 1,4-butanediol and 120 to 190 mol% in total of terephthalic acid and 1,4-butanediol, based on 100 mol% in total of all the acid components and 100 mol% in total of all the glycol components. As the copolymerization component, at least one selected from the group consisting of isophthalic acid, sebacic acid, adipic acid, trimellitic acid, 2,6-naphthalenedicarboxylic acid, ethylene glycol, diethylene glycol, neopentyl glycol, 1,4-cyclohexanedimethanol, 1,2-propanediol, 1,3-propanediol, and 2-methyl-1,3-propanediol may be contained.

Among them, isophthalic acid is preferred as the copolymerization component. In that case, the copolymerization ratio of isophthalic acid is preferably 10 to 40 mol%, more preferably 20 to 40 mol%, based on 100 mol% in total of all the acid components constituting copolymerized polybutylene terephthalate resin (C). At a copolymerization ratio of less than 10 mol%, the transferability to a mold is poor, so that a sufficient appearance tends to be hardly obtained. At a copolymerization ratio of more than 40 mol%, the molding cycle and releasability may decrease in some cases.

As a measure of the molecular weight of copolymerized polybutylene terephthalate resin (C), the reduced viscosity (0.1 g of a sample is dissolved in 25 ml of a mixed solvent of phenol/tetrachloroethane (mass ratio: 6/4) for measurement at 30°C with use of an Ubbelohde viscosity tube) is preferably 0.4 to 1.5 dl/g, more preferably 0.4 to 1.3 dl/g, though being slightly different depending on the specific copolymerization composition. At a reduced viscosity of less than 0.4 dl/g, the toughness tends to decrease, and at a reduced viscosity of more than 1.5 dl/g, the fluidity tends to decrease.

The content of copolymerized polybutylene terephthalate resin (C) is 1 to 10 parts by mass, preferably 2 to 8 parts by mass. At a content of less than 1 part by mass, the appearance defects caused by floating of fiber reinforcing material and poor transferability to a mold become to stand out, and at a content of more than 10 parts by mass, the molding cycle is prolonged, though the appearance of a molding is improved.

Copolymerized polyethylene terephthalate resin (D) in the present invention is a resin that contains 40 mol% or more of ethylene glycol and 80 to 180 mol% in total of terephthalic acid and ethylene glycol, based on 100 mol% in total of all the acid components and 100 mol% in total of all the glycol components. As a copolymerization component, at least one selected from the group consisting of isophthalic acid, sebacic acid, adipic acid, trimellitic acid, 2,6-naphthalenedicarboxylic acid, diethylene glycol, neopentyl glycol, 1,4-cyclohexanedimethanol, 1,4-butanediol, 1,2-propanediol, 1,3-propanediol, and 2-methyl-1,3-propanediol maybe contained, which is preferably amorphous. It is preferable that the content of 1,4-butanediol as the copolymerization component be 20 mol% or less.

From the viewpoint of various properties, neopentyl glycol or a combination of neopentyl glycol and isophthalic acid is preferably used as the copolymerization components, in particular.

Based on 100 mol% in total of all the glycol components constituting copolymerized polyethylene terephthalate resin (D), the copolymerization ratio of neopentyl glycol is preferably 20 to 60 mol%, more preferably 25 to 50 mol%.

Based on 100 mol% in total of all the acid components constituting copolymerized polyethylene terephthalate resin (D), the copolymerization ratio of isophthalic acid is preferably 20 to 60 mol%, more preferably 25 to 50 mol%.

As a measure of the molecular weight of copolymerized polyethylene terephthalate resin (D), the reduced viscosity (0.1 g of a sample is dissolved in 25 ml of a mixed solvent of phenol/tetrachloroethane (mass ratio: 6/4) for measurement at 30°C with use of an Ubbelohde viscosity tube) is preferably 0.4 to 1.5 dl/g, more preferably 0.4 to 1.3 dl/g, though being slightly different depending on the specific copolymerization composition. At a reduced viscosity of less than 0.4 dl/g, the toughness tends to decrease, and at a reduced viscosity of more than 1.5 dl/g, the fluidity tends to decrease.

The content of copolymerized polyethylene terephthalate resin (D) is 5 to 12 parts by mass, preferably 6 to 11 parts by mass, and more preferably 7 to 11 parts by mass. At a content of less than 5 part by mass, the appearance defects caused by floating of fiber reinforcing material become to stand out, and at a content of more than 12 parts by mass, the molding cycle is prolonged, though the appearance of a molding is improved.

The polycarbonate in polycarbonate resin (E) for use in the present invention may be produced by a solvent method, i.e., a reaction between dihydric phenol and a carbonate precursor such as phosgene in the presence of a known acid acceptor and molecular weight modifier in a solvent such as methylene chloride, or a transesterification reaction between a dihydric phenol and a carbonate precursor such as diphenyl carbonate. Examples of the dihydric phenol preferably used include bisphenols, in particular, 2,2-bis (4-hydroxyphenyl) propane, i.e., bisphenol A. Further, a part or all of bisphenol A may be replaced with another dihydric phenol. Examples of the dihydric phenol other than bisphenol A include a compound such as hydroquinone, 4,4'-dihydroxydiphenyl and bis(4-hydroxyphenyl)alkane, and halogenated bisphenols such as bis(3,5-dibromo-4-hydroxyphenyl)propane and bis(3, 5-dichloro-4-hydroxyphenyl)propane. The polycarbonate may be a homopolymer of one dihydric phenol or a copolymer of two or more dihydric phenols. As polycarbonate resin (E), a resin formed of polycarbonate alone is preferably used. Polycarbonate resin (E) may be a resin obtained by copolymerizing a component other than polycarbonate (e.g., polyester component) within a range where the effect of the present invention is not impaired (20 mass% or less).

It is preferable that polycarbonate resin (E) for use in the present invention has high fluidity, in particular. Ones having a melt volume rate (unit: cm³/10 min) measured under a load of 1.2 kg at 300°C of 20 to 100 are preferably used, and the melt volume rate is more preferably 25 to 95, still more preferably 30 to 90. If one having a melt volume rate of less than 20 is used, the fluidity is significantly reduced, so that a decrease in strand stability and deterioration of moldability may be caused in some cases. At a melt volume rate of more than 100, deterioration of physical properties may be caused due to too low a molecular weight and a problem such as gas generation tends to be caused by decomposition.

The content of polycarbonate resin (E) for use in the present invention is 1 to 6 parts by mass, preferably 2 to 5 parts by mass. At a content of less than 1 part by mass, an effect for improving textured appearance is small, while at a content of more than 6 parts by mass, the molding cycle is deteriorated due to a decrease in crystallinity, and appearance defects tend to occur due to a decrease in fluidity.

Fiber reinforcing material (F) in the present invention is not particularly limited as long as it has a fibrous form, and specific examples thereof include glass fiber, carbon fiber, potassium titanate fiber, silica/alumina fiber, zirconia fiber and metal fiber. In particular, glass fiber and carbon fiber are preferred.

As the glass fiber, a milled fiber that is a short glass fiber having an average fiber diameter of about 4 to 20 µm and a cut length of about 30 to 150 µm, and a chopped strand glass fiber having an average fiber diameter of about 1 to 20 µm and a cut fiber length of about 1 to 20 mm may be preferably used. The glass fiber for use may have a circular cross-section or a non-circular cross-section. As the glass fiber having a circular cross-section, a very common one having an average fiber diameter of about 4 to 20 µm and a cut length of about 2 to 6 mm may be used. Examples of the glass fiber having a non-circular cross-section include one having a cross-section perpendicular to the length direction of the fiber in an approximately elliptical shape, an approximately oval shape, or an approximately cocoon-like shape, which has a flatness of preferably 1.3 to 8. The flatness is defined as follows. A rectangle having the smallest area, which circumscribes a cross section perpendicular to the longitudinal direction of the glass fiber, is assumed. The major diameter is the length of the long side of the rectangle, and the minor diameter is the length of the short side. The ratio of major diameter/minor is the flatness. The thickness of the glass fiber is not particularly limited, and one having a minor diameter of 1 to 20 µm and a major diameter of about 2 to 100 µm may be used.

The carbon fiber is not particularly limited as long as it has a fiber diameter of 3 to 10 µm and a tensile strength of 3.0 GPa or more. The production method is also not limited as long as it is a publicly disclosed method, and PAN carbon fibers are preferred in order to improve mechanical properties. It is more preferable that the strength of the carbon fiber be 4.5 GPa or more and the fiber diameter be 4.5 to 7.5 µm. In a kneading process, it is preferable that the carbon fiber be a chopped strand obtained by cutting a fiber bundle treated with a coupling agent or a sizing agent into 3 to 8 mm. The upper limit of the strength of the carbon fiber is not particularly limited, and those having a strength of 6.0 GPa or less may be preferably used.

One of these fiber reinforcing materials (F) may be used alone, or two or more thereof may be used in combination. In a preferred aspect, glass fiber and carbon fiber are used in combination as fiber reinforcing material (F). In that case, it is preferable that 10 to 50 mass% of glass fiber and 50 to 90 mass% of carbon fiber be used, based on 100 mass% of the total amount of fiber reinforcing material (F).

In the case of using glass fiber and carbon fiber in combination, use of glass fiber having a flat cross section as the glass fiber has a more excellent effect. In other words, a combination of use of glass fiber with a flat cross section (F-1) having a ratio between major diameter and minor diameter (major diameter/minor diameter) of 1.3 to 8 from the viewpoint of appearance and elastic modulus and use of carbon fiber (F-2) from the viewpoint of rigidity is in a preferred aspect of fiber reinforcing material (F). In that case, based on 100 mass% of the total amount of fiber reinforcing material (F), 10 to 50 mass% of glass fiber with a flat cross section (F-1) and 50 to 90 mass% of carbon fiber (F-2) are preferred, 15 to 50 mass% of glass fiber with a flat cross section (F-1) and 50 to 85 mass% of carbon fiber (F-2) are more preferred, and 30 to 50 mass% of glass fiber with a flat cross section (F-1) and 50 to 70 mass% of carbon fiber (F-2) are still more preferred.

The average fiber diameter and the average fiber length of fiber may be measured through electron microscopic observation.

As the glass fiber and carbon fiber, those pretreated with a conventionally known coupling agent such as an organic silane compound, an organic titanium compound, an organic borane compound and an epoxy compound may be preferably used.

In the reinforced thermoplastic polyester resin composition of the present invention, inorganic reinforcing materials other than fiber reinforcing material (F) may be used in combination depending on the purpose, and within a range where the properties are not impaired. Specific examples thereof include commercially available mica, wollastonite, acicular wollastonite, glass flakes, and glass bead, and even those treated with a generally known coupling agent may be used without problems. In the case of using an inorganic reinforcing material other than fiber reinforcing material (F) in combination, in considering the content of each component of the reinforced thermoplastic polyester resin composition of the present invention, the content of fiber reinforcing material (F) is based on the total amount of fiber reinforcing material (F) and other inorganic reinforcing materials. In the case of using fiber reinforcing material (F) and another inorganic reinforcing material in combination, fiber reinforcing material (F) is used in an amount of preferably 50 mass% or more, more preferably 70 mass% or more, and still more preferably 80 mass% or more. However, as the inorganic reinforcing material, a material having a large effect of nucleating agent (such as talc) is not preferred, because even a small amount of addition results in a crystallization temperature during cooling TC2 beyond the range specified in the present invention.

From the viewpoints of rigidity, strength and appearance, the content of fiber reinforcing material (F) in the present invention is 45 to 60 parts by mass, preferably 50 to 60 parts by mass.

The reinforced thermoplastic polyester resin composition of the present invention containing 10 to 50 mass% of glass fiber with a flat cross section (F-1) and 50 to 90 mass% of carbon fiber (F-2), based on 100 mass% of the total amount of the fiber reinforcing material (F), allows a molding obtained by injection molding of the reinforced thermoplastic polyester resin composition to have a Charpy impact strength of 10 kJ/m² or more. Fiber reinforcing material (F) having the composition ratio allows a molding to have high mechanical properties and good appearance.

As the name implies, the transesterification inhibitor (G) for use in the present invention is a stabilizer that prevents the transesterification reaction of a polyester resin. In an alloy of polyester resins alone, transesterification occurs to not a small extent due to heat history, no matter how optimized the production conditions are. If it occurs to a very large extent, the desired characteristics of the alloy cannot be obtained. In particular, transesterification between polybutylene terephthalate and polycarbonate often occurs, and in that case, the crystallinity of polybutylene terephthalate is significantly reduced, which is not preferable. In the present invention, by addition of component (G), the transesterification reaction between polybutylene terephthalate resin (A) and polycarbonate resin (E) is particularly prevented, so that appropriate crystallinity can be maintained.

As transesterification inhibitor (G), a phosphorus compound having a catalyst deactivation effect on the polyester resin may be preferably used, and for example, "ADEKA STAB AX-71" manufactured by ADEKA Corporation may be used.

The amount (content) of transesterification inhibitor (G) added for use in the present invention is 0.05 to 2 parts by mass, preferably 0.1 to 1 part by mass. With a content of less than 0.05 parts by mass, the desired transesterification prevention performance may not be exhibited in many cases. To the contrary, even with an addition of more than 2 parts by mass, the effect is not improved so much, and may cause increases of gas in some cases.

Since it is composed of the above respective components and contains 45 to 60 parts by mass of fiber reinforcing material (F), the reinforced thermoplastic polyester resin composition of the present invention allows a molding obtained by injection molding of the reinforced thermoplastic polyester resin composition to have a bending modulus of more than 30 GPa.

The reinforced thermoplastic polyester resin composition of the present invention has a crystallization temperature during cooling TC2 in a range of 165°C or more and less than 190°C as measured by differential scanning calorimetry (DSC). TC2 is the top temperature of crystallization peak of a thermogram obtained by heating to 300°C at a heating rate of 20°C/min under a nitrogen stream, holding the temperature for 5 minutes, and then lowering the temperature to 100°C at a rate of 10°C/min, using a differential scanning calorimeter (DSC). At a TC2 of 190°C or more, crystallization rate of the polyester resin composition increases, so that crystallization in the mold occurs quickly. The propagation speed of the injection pressure, therefore, tends to decrease particularly in a composition containing a large amount of fiber reinforcing material. As a result, due to insufficient adhesion between an injected product and the mold and the effect of shrinkage during crystallization, the fiber reinforcing materials stand out on the surface of the molding, etc. to deteriorate the appearance of the molding. In that case, a method of delaying solidification of the molding by raising the mold temperature to a high temperature of 120 to 130°C may be considered. Although the surface gloss and appearance are improved in the central portion where the injection pressure is high in the mold by the method, defects such as floating of the fiber reinforcing material are likely to occur in the end portion where injection pressure is hardly applied, so that it is difficult to obtain a uniformly good appearance. Further, since the temperature of the molding taken out from the mold is high, warp of the molding increases.

In contrast, in the case where TC2 is less than 165°C, the crystallization rate becomes too slow, and the slow crystallization may cause mold release failure due to sticking to the mold or deformation during extrusion in some cases. In addition, since the pressure during molding allows the resin to easily penetrate deeper into the texture, the texture may deviate during shrinkage of the resin in the mold or during mold release, resulting in non-uniform depth of the texture. It is therefore difficult to obtain a good textured appearance. In consideration of these concerns during molding, the reinforced thermoplastic polyester resin composition of the present invention is adjusted to have an optimum TC2, so that a good appearance and moldability can be obtained even at a mold temperature of 100°C or less.

TC2 may be also adjusted through adjustment of the content of polyethylene terephthalate resin (B) and copolymerized polyethylene terephthalate resin (D). However, since these components have a great influence on the shrinkage rate, the releasability, etc., there was a problem that the range of molding conditions for obtaining a good appearance is narrowed even with TC2 controlled in the target range through these adjustments. Further, even in the case where a good appearance is obtained, there were problems including deterioration of the releasability, etc. It has been found that the reinforced thermoplastic polyester resin composition of the present invention has an extremely wide range of molding conditions for obtaining a good appearance through adjustment of TC2 with a specific content of copolymerized polybutylene terephthalate resin (C), so that molding can be performed without adverse effects on the other properties. According to the present invention, even a composition containing more than 50 mass% of fiber reinforcing material (F) in 100 mass% of the reinforced thermoplastic polyester resin composition, in which floating of the fiber reinforcing material occurs extremely easily, allows a good appearance to be obtained in a wide range of molding conditions due to the blending effect of copolymerized polybutylene terephthalate resin (C).

Accordingly, a good surface appearance can be obtained by molding the reinforced thermoplastic polyester resin composition of the present invention, at a mold temperature of about 100°C, in a wide range of injection rate under a wide range of molding conditions. In particular, an extremely jet-black molding having a uniform appearance without texture irregularity can be produced using a textured mold.

The reinforced thermoplastic polyester resin composition of the present invention may contain various known additives if necessary, within a range where properties in the present invention are not impaired. Examples of the known additives include a colorant such as a pigment, a mold release agent, a heat resistance stabilizer, an antioxidant, an ultraviolet absorber, a light stabilizer, a plasticizer, a modifier, an antistatic agent, a flame retardant, and a dye. These various additives may be contained in a total amount of up to 5 mass%, based on 100 mass% of the reinforced thermoplastic polyester resin composition. In other words, it is preferable that the total amount of (A), (B), (C), (D), (E), (F) and (G) be 95 to 100 mass%, in 100 mass% of the reinforced thermoplastic polyester resin composition.

Examples of the mold release agent include a long-chain fatty acid or an ester thereof and a metal salt thereof, an amide compound, a polyethylene wax, silicon, and polyethylene oxide. As the long-chain fatty acid, one having 12 or more carbon atoms is particularly preferred, and examples thereof include stearic acid, 12-hydroxystearic acid, behenic acid, and montanic acid. A part or the whole of carboxylic acid may be esterified with monoglycol or polyglycol, or may form a metal salt. Examples of the amide compound include ethylene bis-terephthalamide and methylene bis-stearylamide. These mold release agents may be used alone or as a mixture.

A production method of the reinforced thermoplastic polyester resin composition of the present invention includes mixing each of the components and various stabilizers, pigments, etc., on an as needed basis, and melt-kneading the mixture. The melt-kneading method may be any method known to those skilled in the art with use of a single-screw extruder, a twin-screw extruder, a pressurizing kneader, a Banbury mixer, or the like. In particular, use of a twin-screw extruder is preferred. Typical melt-kneading conditions include a cylinder temperature of twin-screw extruder of 240 to 290°C, and a kneading time of 2 to 15 minutes. However, in order to produce a resin composition in which each component is more uniformly dispersed without poorly dispersed aggregates, melt-kneading is performed as follows. The barrel length of a kneading device from a main feed position to a die is assumed to be 100, and the most upstream main feed position as start position of kneading is assumed to be at 0. In a standard supply method of the fiber reinforcing material such as glass fiber, side feed is performed at a barrel position of 50 to 80 for melt-kneading in only one kneading zone. In contrast, it is preferable that side feed of carbon fiber (F2) be performed at a barrel position of 30 to 45 on the upstream side, and melt-kneading be performed in two or more kneading zones.

### Examples

The present invention will be more specifically described with reference to Examples, though the present invention is not limited thereto. The measured values described in Examples were measured by the following methods.

### (1) Reduced viscosity of polyester resin

In 25 ml of a mixed solvent of phenol/tetrachloroethane (mass ratio: 6/4), 0.1 g of a sample was dissolved and measured at 30°C using an Ubbelohde viscosity tube. (unit: dl/g)

### (2) Crystallization temperature during cooling (TC2)

Top temperature of crystallization peak of a thermogram was obtained by heating to 300°C at a heating rate of 20°C/min under a nitrogen stream, holding the temperature for 5 minutes, and then lowering the temperature to 100°C at a rate of 10°C/min, using a differential scanning calorimeter (DSC).

### (3) Appearance of molding

A molding having a length of 100 mm, a width of 100 mm and a thickness of 3 mm was injection molded under the conditions at a cylinder temperature of 275°C and a mold temperature of 100°C in an injection speed range with a filling time of 1 second. The mirror surface and the textured appearance of the molding were visually observed. The texture was made using a textured mold with a satin finish having a depth of 15 µm. Marks "A " and "B " are at a level with no particular problem.
A: No appearance defect such as floating of glass fiber and sink marks is observed on the surface, having a good textured appearance.
B: In a part (particularly at an end of a molding), some appearance defects occur. Otherwise, due to occurrence of texture deviation, there is a portion looking white or so as it is observed at different angles.
C: Appearance defects occur on the whole of a molding.

### (4) Mold releasability

Determination was made based on the mold releasability in molding under conditions described in (3), with a cooling time after completion of injection step being set to 5 seconds (total molding cycle: 17 seconds). Marks "A " and "B " are at a level with no particular problem.
A: Continuous molding can be easily performed without problem in mold releasability.
B: Continuous molding can be performed, though a mold release defect occurs in several shots.
C: Continuous molding cannot be performed due to occurrence of mold release defect in every shot.

### (5) Bending strength and bending modulus

The measurement was performed in accordance with ISO-178. The test piece was injection molded under conditions at a cylinder temperature of 270°C and a mold temperature of 100°C.

### (6) Charpy impact strength

The measurement was performed in accordance with ISO-179. The test piece was injection molded under conditions at a cylinder temperature of 270°C and a mold temperature of 100°C.

The blending components for use in Examples and Comparative Examples are as follows.

Polybutylene terephthalate resin (A):
(A-1) polybutylene terephthalate: manufactured by Toyobo Co., Ltd., reduced viscosity: 0.58 dl/g
(A-2) polybutylene terephthalate: manufactured by Toyobo Co., Ltd., reduced viscosity 0.68 dl/g

Polyethylene terephthalate resin (B):
(B) polyethylene terephthalate: manufactured by Toyobo Co., Ltd., reduced viscosity: 0.63 dl/g

Copolymerized polybutylene terephthalate resin (C):
(C-1) copolymerized polybutylene terephthalate: copolymer having a composition ratio TPA/IPA//1,4-BD=70/30//100 (mol%), manufactured by Toyobo Co., Ltd., prototype of Toyobo VYLON (registered trademark), reduced viscosity: 0.73 dl/g
(C-2) copolymerized polybutylene terephthalate: copolymer having a composition ratio TPA/IPA//1,4-BD=80/20//100 (mol%), manufactured by Toyobo Co., Ltd., prototype of Toyobo VYLON (registered trademark), reduced viscosity: 0.80 dl/g

Copolymerized polyethylene terephthalate resin (D):
(D) copolymerized polyethylene terephthalate: copolymer having a composition ratio TPA//EG/NPG=100//70/30 (mol%), manufactured by Toyobo Co., Ltd., prototype of Toyobo VYLON (registered trademark), reduced viscosity: 0.83 dl/g
(The abbreviations indicate the followings, respectively. TPA: terephthalic acid, IPA: isophthalic acid, 1,4-BD: 1,4-butanediol, EG: ethylene glycol, NPG: neopentyl glycol component.)

Polycarbonate resin (E):
(E) polycarbonate: "CALIBRE 200-80" manufactured by Sumika Styron Polycarbonate Ltd., melt volume rate (300°C, load: 1.2kg):80 cm³/10 min

Fiber reinforcing material (F): (fiber diameter and fiber length: measured values through electron microscopic observation)
(F-1) glass fiber: "CSG3PL830S" manufactured by Nitto Boseki Co., Ltd., flat cross section, ratio between major diameter and minor diameter: 2 (minor diameter: 10 µm, major diameter: 20 µm), average fiber length: 3 mm
(F-2) carbon fiber: "CFUW-LC-HS" manufactured by Nippon Polymer Sangyo Co., Ltd., fiber diameter: 5.5 µm, cut length: 6 mm, tensile strength: 5.5 GPa
(F-3) glass fiber: "T-120H" manufactured by Nippon Electric Glass Co., Ltd., circular cross section, average fiber length: 3 mm, average fiber diameter: 11 µm

Reinforcing material other than fiber reinforcing material:
Mica: "A-21S" manufactured by Yamaguchi Mica Co., Ltd., average particle size: 23 µm (MV value obtained by laser diffraction method)

Transesterification inhibitor (G):
(G) transesterification inhibitor: "ADEKA STAB AX-71" manufactured by ADEKA Corporation

Additive:
Stabilizer (antioxidant): "Irganox 1010" manufactured by Ciba Japan K.K.
Mold release agent: "LICOWAX-OP" manufactured by Clariant Japan K.K.
Black pigment: "ABF-T-9534" manufactured by Resino Color Co., Ltd.

### Examples 1 to 9, and Comparative Examples 1 to 8

The reinforced polyester resin compositions in Examples and Comparative Examples prepared by weighing the raw materials described above according to the blending ratio (parts by mass) shown in Table 1 were melt-kneaded by a twin-screw extruder having a diameter of 35 mm (manufactured by Shibaura Machine Co., Ltd.) at a cylinder temperature of 270°C, and a screw rotation speed of 200 rpm. The raw materials other than reinforcing materials were fed from a hopper into the twin-screw extruder, and reinforcing material was fed from a side feeder through a vent port (two or more reinforcing materials for use were fed from separate side feeders). The resulting pellets of reinforced polyester resin composition were dried, and then formed into samples for various evaluations by an injection molding machine. The evaluation results are shown in Table 1.

**[Table 1]**

| | Type | Ex. 1 | Ex. 2 | Ex. 3 | Ex.4 | Ex. 5 | Ex. 6 | Ex. 7 | Ex. 8 | Ex. 9 | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|---|---|---|---|---|---|---|---|---|
| Composition | (A-1) Polybutylene terephthalate | 26 | 26 | | 23 | 21 | 25 | 26 | 26 | 26 | 15 | 40 | 26 | 30 | | | 27 | 26 |
| | (A-2) Polybutylene terephthalate | | | 26 | | | | | | | | | | | 30 | 30 | | |
| | (B) Polyethylene terephthalate | 5 | 5 | 5 | 5 | 5 | 5 | 7 | 6 | 5 | 5 | 7 | 5 | 6 | 6 | 6 | 6 | 5 |
| | (C-1) Copolymerized polybutylene terephthalate | 5 | 5 | 5 | | 5 | 6 | 3 | 6 | 7 | 5 | 7 | 5 | | | | | 5 |
| | (C-2) Copolymerized polybutylene terephthalate | | | | 8 | | | | | | | | | | | | | |
| | (D) Copolymerized polyethylene terephthalate | 10 | 10 | 10 | 10 | 10 | 10 | 10 | 7 | 10 | 9 | 12 | 9 | 11 | 10 | 10 | 12 | 10 |
| | (E) Polycarbonate | 4 | 4 | 4 | 4 | 4 | 4 | 4 | 5 | 2 | 3 | 4 | 4 | 3 | 4 | 4 | | 4 |
| | (F-1) Glass fiber | 10 | 20 | 20 | 20 | 25 | | 20 | 20 | 20 | 63 | | 41 | 10 | 10 | 20 | | 20 |
| | (F-2) Carbon fiber | 40 | 30 | 30 | 30 | 30 | 30 | 30 | 30 | 30 | | 30 | | 40 | 40 | 30 | | 30 |
| | (F-3) Glass fiber | | | | | | 20 | | | | | | | | | | 55 | |
| | Mica | | | | | | | | | | | | 10 | | | | | |
| | (G) Transesterification inhibitor | 0.15 | 0.15 | 0.15 | 0.15 | 0.15 | 0.15 | 0.15 | 0.15 | 0.15 | 0.15 | 0.15 | 0.15 | 0.15 | 0.15 | 0.15 | | |
| Properties | Crystallization temperature during cooling [°C] | 184 | 184 | 183 | 181 | 180 | 184 | 185 | 182 | 180 | 176 | 178 | 177 | 188 | 187 | 187 | 180 | 163 |
| | Bending strength [MPa] | 310 | 300 | 300 | 300 | 310 | 290 | 299 | 300 | 300 | 285 | 270 | 220 | 311 | 315 | 302 | 250 | 295 |
| | Bending modulus [GPa] | 37 | 33 | 33 | 32 | 34 | 31 | 32 | 32 | 33 | 23 | 26 | 17 | 38 | 38 | 33 | 18 | 32 |
| | Charpy impact strength [kJ/cm²] | 10 | 12 | 12 | 11 | 15 | 8 | 11 | 12 | 10 | 23 | 7 | 10 | 10 | 11 | 12 | 12 | 11 |
| | Mold releasability | A | A | A | A | A | A | A | A | A | A | A | A | A | A | A | A | C |
| | Appearance of molding | B | A | A | A | A | B | A | A | A | A | A | A | C | C | C | B | C |

| | | | | | | | | | | | | | | | | | | |
|---|---|---|---|---|---|---|---|---|---|---|---|---|---|---|---|---|---|---|
| (Note) * Composition is expressed in parts by mass (Total amount of A to F components is 100 parts by mass). * Relative to the total amount of the compositions A to F (parts by mass), 0.2 parts by mass of stabilizer (antioxidant), 0.3 parts by mass of mold release agent, and 1.0 part by mass of black pigment are contained. | | | | | | | | | | | | | | | | | | |

As shown in Table 1, it is seen that Examples 1 to 9 can provide high rigidity with a bending modulus of 30 GPa or more, but also a good appearance due to TC2 in the range of 165°C≤TC2<190°C. In Example 1 and Example 6, the appearance tends to deteriorate slightly in comparison with other Examples.

On the other hand, in Comparative Examples 1 to 8, any of properties, particularly appearance, was inferior to those in Examples. In other words, it is very likely that molding conditions for good appearance cannot be found or the conditions are extremely narrow. As a result, there are problems of not only no degree of freedom for various shapes, but also reduced productivity.

### INDUSTRIAL APPLICABILITY

According to the present invention, a molding having high strength, high rigidity (bending modulus of more than 30 GPa) and a good surface appearance can be stably obtained in a wide range of molding conditions, which greatly contributes to the industry.

## Claims

1. A reinforced thermoplastic polyester resin composition, comprising 20 to 35 parts by mass of a polybutylene terephthalate resin (A), 1 to 10 parts by mass of a polyethylene terephthalate resin (B), 1 to 10 parts by mass of a copolymerized polybutylene terephthalate resin (C), 5 to 12 parts by mass of a copolymerized polyethylene terephthalate resin (D), 1 to 6 parts by mass of a polycarbonate resin (E), 45 to 60 parts by mass of a fiber reinforcing material (F), and 0.05 to 2 parts by mass of a transesterification inhibitor (G), based on 100 parts by mass in total of components (A), (B), (C), (D), (E) and (F), and satisfying the following requirements:
(1) a molding obtained by injection molding of the reinforced thermoplastic polyester resin composition has a bending modulus of more than 30 GPa; and
(2) the reinforced thermoplastic polyester resin composition has a crystallization temperature during cooling TC2 (°C) of 165°C or more and less than 190°C as measured by differential scanning calorimetry (DSC).

2. The reinforced thermoplastic polyester resin composition according to claim 1, wherein the fiber reinforcing material (F) contains a glass fiber with a flat cross section (F-1) having a ratio between major diameter and minor diameter of a fiber cross section (major diameter/minor diameter) of 1.3 to 8, and a carbon fiber (F-2).

3. The reinforced thermoplastic polyester resin composition according to claim 1 or 2, wherein the copolymerized polybutylene terephthalate resin (C) contains at least one selected from the group consisting of isophthalic acid, sebacic acid, adipic acid, trimellitic acid, 2,6-naphthalenedicarboxylic acid, ethylene glycol, diethylene glycol, neopentyl glycol, 1,4-cyclohexanedimethanol, 1,2-propanediol, 1,3-propanediol, and 2-methyl-1,3-propanediol, as a copolymerization component.

4. The reinforced thermoplastic polyester resin composition according to any one of claims 1 to 3, wherein the copolymerized polybutylene terephthalate resin (C) contains 10 to 40 mol% of isophthalic acid as copolymerization component, based on 100 mol% in total of all the acid components constituting (C).

5. The reinforced thermoplastic polyester resin composition according to any one of claims 1 to 4, wherein the copolymerized polyethylene terephthalate resin (D) contains at least one selected from the group consisting of isophthalic acid, sebacic acid, adipic acid, trimellitic acid, 2,6-naphthalenedicarboxylic acid, diethylene glycol, neopentyl glycol, 1,4-cyclohexanedimethanol, 1,4-butanediol, 1,2-propanediol, 1,3-propanediol, and 2-methyl-1,3-propanediol, as a copolymerization component.

6. The reinforced thermoplastic polyester resin composition according to any one of claims 1 to 5, wherein the copolymerized polyethylene terephthalate resin (D) contains 20 to 60 mol% of neopentyl glycol as a copolymerization component, based on 100 mol% in total of all the glycol components constituting (D).

7. A molding formed of the reinforced thermoplastic polyester resin composition according to any one of claims 1 to 6, having a textured surface appearance.
